# EUROPEAN PATENT APPLICATION

(11) **EP 0 628 787 A2**
(43) Date of publication of application: **14.12.1994**
(21) Application number: 94304118.6
(22) Date of filing: 08.06.1994
(51) Int. Cl.: G01B 11/30, G01B 11/00, G01N 21/21, G02B 27/28

(54) **Optical sensing device**

(30) Priority: 08.06.1993 JP 137143/93; 28.12.1993 JP 336459/93
(71) Applicant: OMRON CORPORATION, Kyoto 616 (JP)
(72) Inventor: Yasuda, Naru, Vji-city Kyoto 611 (JP); Hosokawa, Hayami, Yawata-city, Kyoto 614 (JP); Tomita, Kouhei, Nagaokakyou-city, Kyoto 617 (JP); Kiyomoto, Hironobu, Nara 631 (JP)
(74) Representative: Calderbank, Thomas Roger

(57) **Abstract**

An optical sensing device including a light source, polarizing beam splitter, and a pair of photodectors. In a preferred embodiment, the device includes a reflecting device behind the polarizing device to allow the detectors to be positioned on one side of the polarizing device to make it more compact.

The optical sensing device allows an object to be positioned at various angles and still provide consistent sensing, since the device compares one component of polarized light with respect to the other component of polarized light.

## Description

This invention concerns an optical sensing device which detects optically the presence of an object, what type of object it is, or the condition of its surface.

Various sensing devices have been proposed to detect the condition of an object's surface. Typical of these is a sensing device which detects surface condition optically by projecting light from a luminous device onto an object and detecting by means of a photodetector device the light reflected by the object. In this way the sensing device can detect the condition of the object.

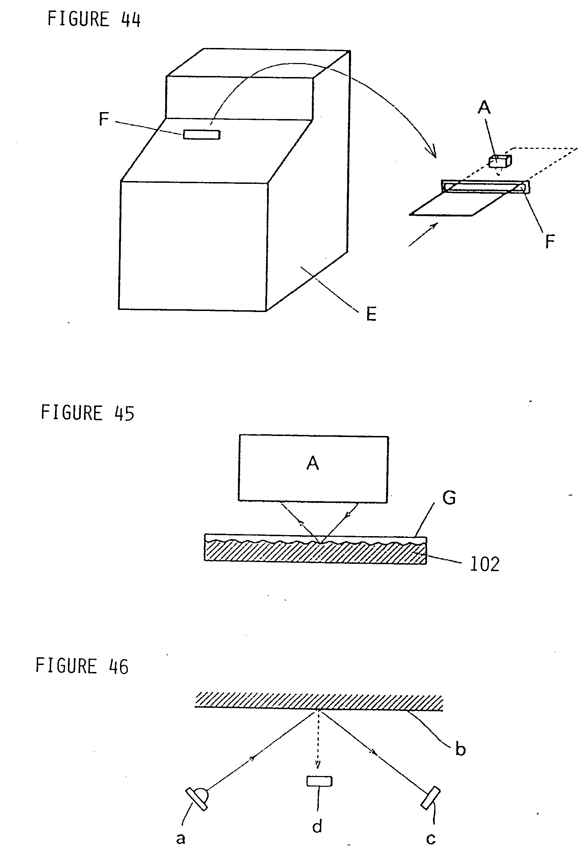

Figure 46 shows a basic model of an existing sensing device to detect surface condition. The light emitted by luminous device LED a strikes the surface of object b obliquely. The reflected light is received by two photodetectors c and d. Photodetector element c is the device which receives the component of the light directly reflected by object b, and photodetector element d receives the component of the light which is scattered as it is reflected. The electrical outputs of photodetector elements c and d are then compared.

With the detector shown in Figure 46, if object b has a smooth surface, the quantity of light striking photodetector c will be greater than that striking photodetector d. If the surface of object b is uneven, the quantity of light striking photodetector d will be greater than that striking photodetector c. Thus, by comparing the electrical outputs of photodetectors c and d, we can detect the condition of the surface of object b.

With the prior art sensing device described above, the quantity of light striking photodetector c will vary greatly if the position or angle of object b is changed. Such changes will have a relatively small effect, however, on the quantity of light striking photodetector d. The fact that the output ratio of photodetectors c and d will vary with changes in the object's position or orientation makes it difficult to detect the condition of the object's surface in a consistent fashion.

Furthermore, although this prior art detector can discriminate among a variety of uneven surfaces, it cannot distinguish between different types of objects (for example, between a smooth metal and glass). Its range of applications, then, as a sensing device to detect surface condition, is limited.

It would be desirable to provide an optical sensing device capable of detecting, in a consistent fashion, the condition of the surface of an object, without being affected in a significant manner by changes in the object's position or orientation, and which is able to discriminate among various kinds of objects.

The invention provides an optical sensing device comprising a light source, for example an LED, to emit light on the object being sensed, a polarizing beam splitter ("PBS"), which receives light reflected by the object and reflects a portion and transmits the remainder of the light, and a pair of photodetectors. The polarizing beam splitter separates the light into two light beams having differently polarized components P and S, and thus, each photodetector only receives one of the components (i.e. either P or S) of the polarized light.

In one preferred embodiment, the detectors are located on opposite sides of the polarizing beam splitter to receive the two different components of light, In another preferred embodiment, a reflecting element is provided behind the polarizing beam splitter to allow both photodectectors to be located on one side of the polarizing beam splitter providing a more compact arrangement. Specifically, the reflecting element reflects the portion of light that passes through the polarizing beam splitter back through the polarizing beam splitter (i.e. changes the direction of this component light beam) to then be directed in substantially the same direction as the other component light beam that is reflected initially by the polarizing beam splitter.

It is preferred that the transmissivity of polarized beam splitter is virtually identical to the reflectivity of reflecting element within a specified range of incidence.

It is preferred that the output ratio of photodetectors does not vary significantly when the position or orientation of the object is changed. This design, allows for a compact arrangement of an optical sensor with a consistent detection function. Because this sensor detects the ratio of P to S polarized components, it can distinguish among various kinds of objects (for example, between a transparent material and a metal with a smooth surface). This sensor thus has a wider array of detection functions than its predecessors.

The photodetector unit can be modularized, which will simplify the portion of the assembly process in which a glass panel is made into a substrate for an optical element. Modularization will also substantially enhance the reliability of the sensor with respect to vibration and similar stresses.

The invention will now be described by way of example with reference to the following drawings in which:

Figure 1 is a diagrammatic view of a first embodiment of the optical sensing device according to the present invention.

Figure 2A is a diagrammatic view of a second embodiment of the optical sensing device according to the present invention.

Figure 2B is a diagrammatic view of a PET bottle in the light beam of the embodiment of Figure 2B.

Figure 3 is a diagrammatic view of rain or water droplets in the light beam of the embodiment of Figure 2B.

Figure 4 is a perspective view of a solid state component incorporating an optical receiving device according to the present invention.

Figure 5 is a perspective view of another solid state component incorporating an optical receiving device according to the present invention.

Figure 6 is a diagrammatic view of a third embodiment of the optical sensing device according to the present invention using fiber optic cables.

Figure 7 is a diagrammatic view of a fourth embodiment of the optical sensing device according to the present invention.

Figure 8 is a diagrammatic view of an embodiment of light emitting device for use in the optical sensing device according of the present invention.

Figure 9 is a graph of the rate of reflectivity verses angle of incidence of the light reflect by object.

Figure 10 is a diagrammatic view of a fifth embodiment of the optical sensing device according to the present invention.

Figure 11 is a diagrammatic view of a sixth embodiment of the optical sensing device according to the present invention.

Figure 12 is a diagrammatic view of a seventh embodiment of the optical sensing device according to the present invention.

Figure 13 is a diagrammatic view of a eighth embodiment of the optical sensing device according to the present invention.

Figure 14 is a diagrammatic view of a ninth embodiment of the optical sensing device according to the present invention.

Figure 15 is a diagrammatic view of a tenth embodiment of the optical sensing device according to the present invention.

Figure 16 is a circuit diagram of one embodiment of the light receiving device according to the present invention.

Figure 17 is a circuit diagram of another embodiment of the light receiving device according to the present invention.

Figure 18 is a diagrammatic view of an eleventh embodiment of the optical sensing device according to the present invention.

Figure 19 is a graph of the transmissivity (reflectivity) verses angle of incidence of the beam splitter shown in Figure 8.

Figure 20 is a diagrammatic view of a twelfth embodiment of the optical sensing device according to the present invention.

Figure 21 is a detailed cross-sectional view of a prism for use in the optical sensing device according to the present invention.

Figure 22 is a diagrammatic view of an application of the optical sensing device according to the present invention shown in Figure 20.

Figure 23 is a diagrammatic view of the embodiment shown in Figure 20 to explain operation thereof.

Figure 24 is a detailed view of a portion of the embodiment shown in Figure. 20.

Figure 25 is graph of the angle of reflectivity verses angle of incident of light reflecting mirror.

Figure 26 is a diagrammatic view showing another embodiment of the reflecting mirror.

Figure 27 is a diagrammatic view showing a further embodiment of the reflecting mirror.

Figure 28 is a diagrammatic view showing the combination of both a reflecting mirror and prism for reflecting light.

Figure 29 is a diagrammatic view showing a prism only for reflecting light.

Figure 30 is a diagrammatic view showing the combination of a lens and prism for reflecting light.

Figure 31 is a diagrammatic view showing the combination of a Fresnel lens and prism for reflecting light.

Figure 32 is a diagrammatic view showing the combination of a prism for reflecting light and a light receiving device.

Figure 33A is a diagrammatic view showing the combination of a lens, mirror and optical fiber for reflecting and receiving light.

Figure 33B is a diagrammatic view showing another combination of a lens, mirror and optical fiber for reflecting and receiving light.

Figure 33C is a diagrammatic view showing a further combination of a lens, mirror and optical fiber for reflecting and receiving light.

Figure 34 is a diagrammatic view showing a further embodiment of the optical sensing device shown in Figure 20.

Figure 35 is a diagrammatic view showing a further embodiment of the optical sensing device shown in Figure 20.

Figure 36 is a perspective view showing a first application of the optical sensing device according to the present invention.

Figure 37 is a perspective view showing a second application of the optical sensing device according to the present invention.

Figure 38 is a perspective view showing a third application of the optical sensing device according to the present invention.

Figure 39 is a perspective view showing a fourth application of the optical sensing device according to the present invention.

Figure 40 is a perspective view showing a fifth application of the optical sensing device according to the present invention.

Figure 41 is a perspective view showing a sixth application of the optical sensing device according to the present invention.

Figure 42 is a perspective view showing a seventh application of the optical sensing device according to the present invention.

Figure 43 is a perspective view showing a eighth application of the optical sensing device according to the present invention.

Figure 44 is a perspective view showing ninth application of the optical sensing device according to the present invention.

Figure 45 is a perspective view showing a tenth application of the optical sensing device according to the present invention.

Figure 46 is a diagrammatic view of a prior art light sensing device.

In this section, we shall discuss an optical device which is a first preferred embodiment with reference to the drawings.

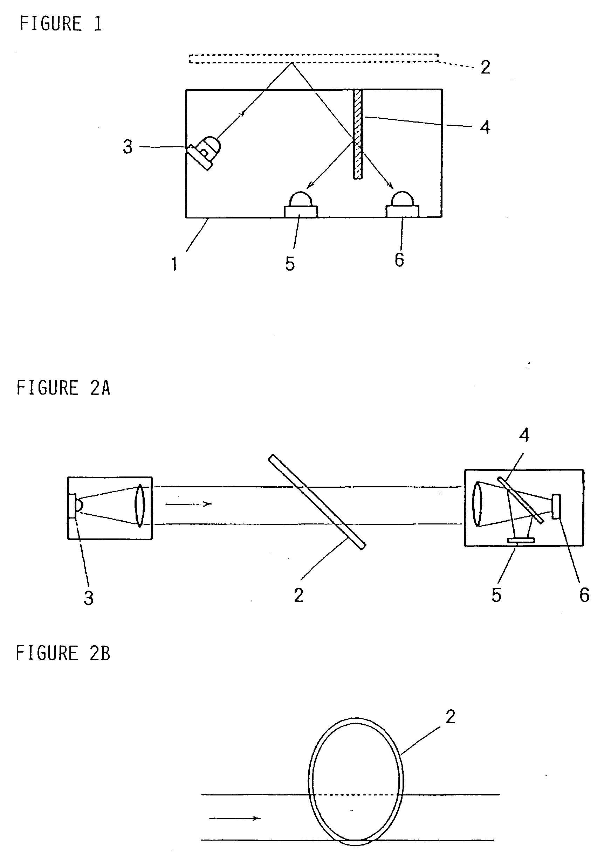

Figure 1 shows the basic principle underlying the optical sensing device of this invention as a first embodiment. An LED 3 or some other light source (light emitting device), which emits light onto object 2 is placed inside case 1. The light emitted by LED 3 strikes object 2 obliquely. The light emitted onto object 2 is reflected by that object and detected by the optical sensing provided inside case 1. This optical sensing consists of polarizing beam splitter (henceforth, PBS) 4, a type of polarizer; and photodetectors 5 and 6.

The PBS 4 is formed from parallel sheets of a transparent glass material. A conductive multilayer film containing conductors or metal film is formed on the surface struck by the light reflected from object 2. This splits the reflected light, which strikes PBS 4 obliquely, into two mutually orthogonal polarized components. The S polarized component is reflected by the surface of PBS 4 and strikes photodetector 5. The P polarized component is transmitted through the flat parallel sheets of transparent glass and it strikes photodetector 6, which is located on an opposite side of PBS 4.

In this configuration, the S and P components of the light reflected by the object are compared. Unlike the prior art device, in which the reflected and diffuse light are compared and the angle of the object effects this comparison, the angle of incidence and reflection of the light beam relative to the surface of the object does not effect the S/P ratio providing a substantially more reliable signal independent of the angle of the object.

Figure 2A shows a second preferred embodiment of the optical sensing device with the light source 3 configured in a separate case from the light receiving portion including PBS 4, and photodetectors 5 and 6 located in another case. In this embodiment, the object 2 is somewhat transparent flat object 2, and is positioned between the light source 3 and light receiving portion containing PBS 4 and detectors 5 and 6.

Figure 2B shows another object (i.e. PET bottle) being sensed by being positioned between the light source 3 and light receiving portion.

With this configuration, if object 2 is transparent, the P polarized component will have greater transmissivity with respect to object 2 than the S polarized component. By taking the ratio of the outputs of photodetectors 5 and 6, the sensor can discriminate whether or not object 2 is transparent. Among transparent objects with different refractive indices, the transmissivities of the P and S polarized components will each vary. This variation can be used to distinguish among transparent objects. If there may be foreign matter attached to the surface of a transparent object, the sensor can also be used to detect its surface condition.

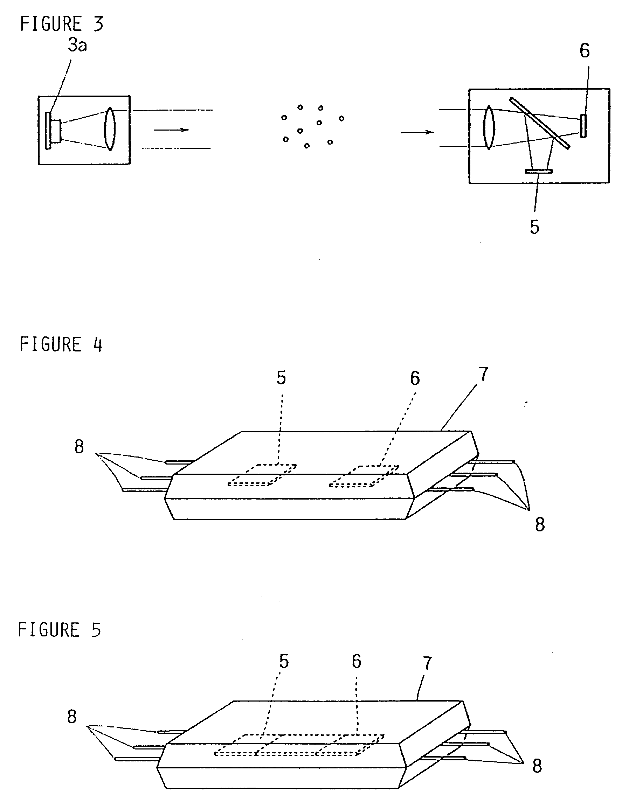

In Figure 3, a semiconductor laser is used so that primarily P polarized light or S polarized light is emitted by LED 3. This light is detected by photodetectors 5 and 6 in the detector unit. If there are objects which scatter the light (rain, snow, frost, foreign matter smaller than the diameter of the beam, or a transparent object with an uneven surface) on the optical path, the outputs of photodetectors 5 and 6 will vary. This variation can be used to detect the presence of such objects.

Figure 3 shows another object (i.e. rain drops or other precipitation) being sensed by being positioned between the light source 3 and the light receiving portion.

In Figure 4, a solid state light receiving unit 7 is shown with light detectors 5 and 6 set apart a distance. The unit includes connecting electrodes 8. In Figure 5, another solid state light receiving unit 7' is shown with light detectors 5' and 6'. The unit includes connecting electrodes 8'.

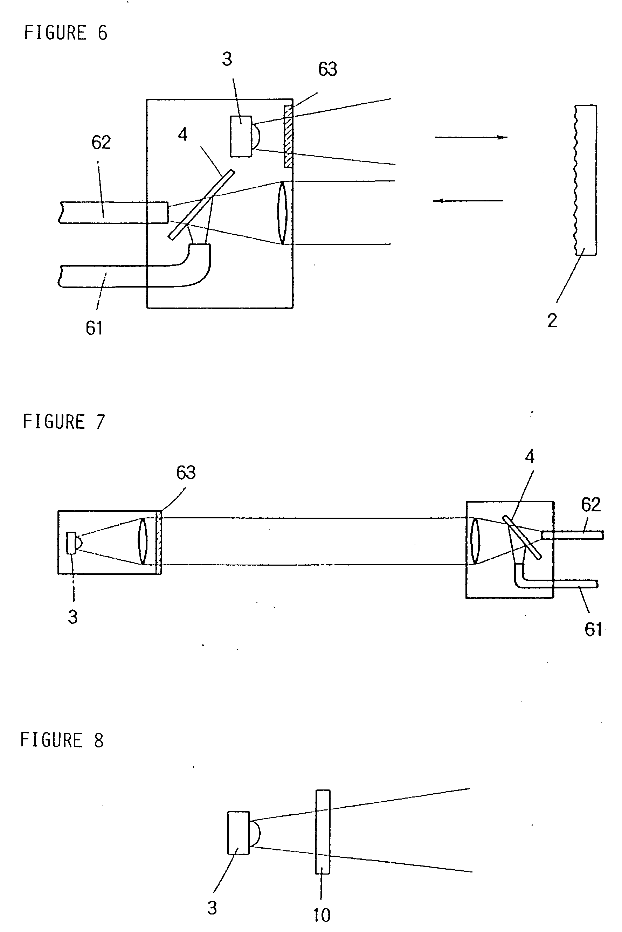

A third preferred embodiment is shown in Figure 6. In this embodiment, optical fibers 61 and 62 are positioned to receive light reflected by object 2. The ends (not shown) of the optical fibers 61 and 62 are fitted with light detectors. A polarizing filter 63 is also provided to allow light to pass through one direction. This arrangement significantly reduces the size of the light receiving unit. A fourth preferred embodiment is shown in Figure 7 with the light source 3 located in a casing separate from the light receiving device.

If the light source 3 is not an LED, then a polarizing filter 10 should be provided, as shown in Figure 8.

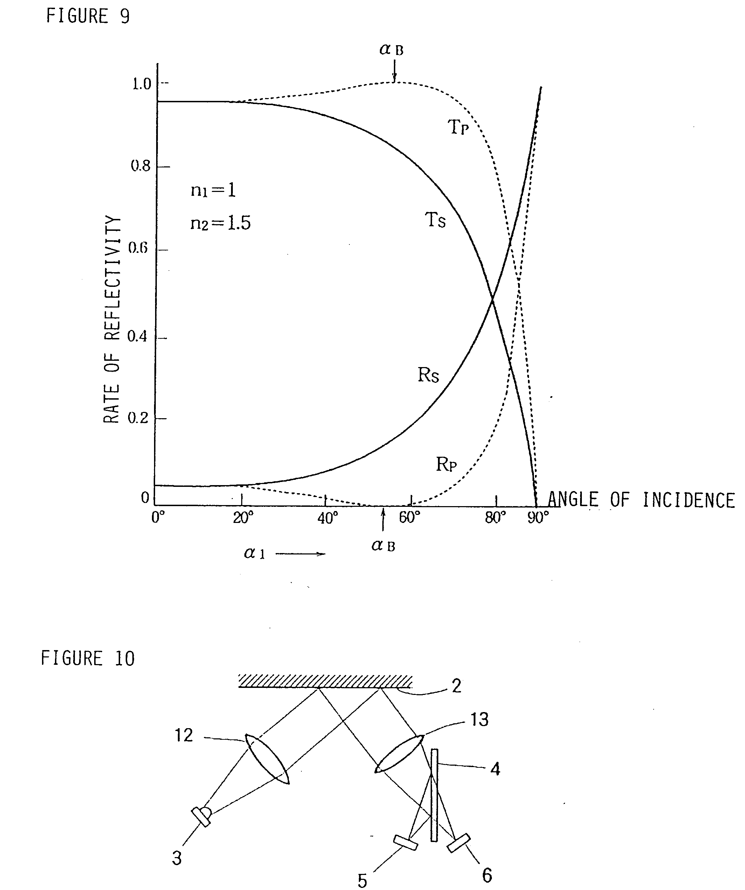

A graph showing the rate of reflectivity verses the angle of incidence is shown in Figure 9. This shows the dependence of the reflectivity of glass on angle of incidence. Reflectivity is represented along the vertical axis and the angle α₁ at which the light emitted by LED 3 strikes the object, in this case, the surface of the glass, along the horizontal axis. Rₛ is the reflectivity of the S polarized component with respect to the glass, and Rₚ that of the P polarized component.

As Figure 9 shows, the ratio of the reflectivities of the S and P polarized components, Rₛ/Rₚ, is greatest at an angle of incidence α₁ of between 50 and 60 degrees. As can be seen in the graph, when the light emitted by LED 3 strikes the surface of the glass at an angle α₁ of 56.3° (-αβ), Rₚ = 0. Angle αβ is commonly known as the Brewster angle. In view of this, if the relative positions of LED 3 and the surface of the glass are selected so that the light emitted by LED 3 strikes the surface of the glass at an angle of incidence α₁ between 40 and 65°, transparent objects (such as glass) will be discriminable with excellent sensitivity.

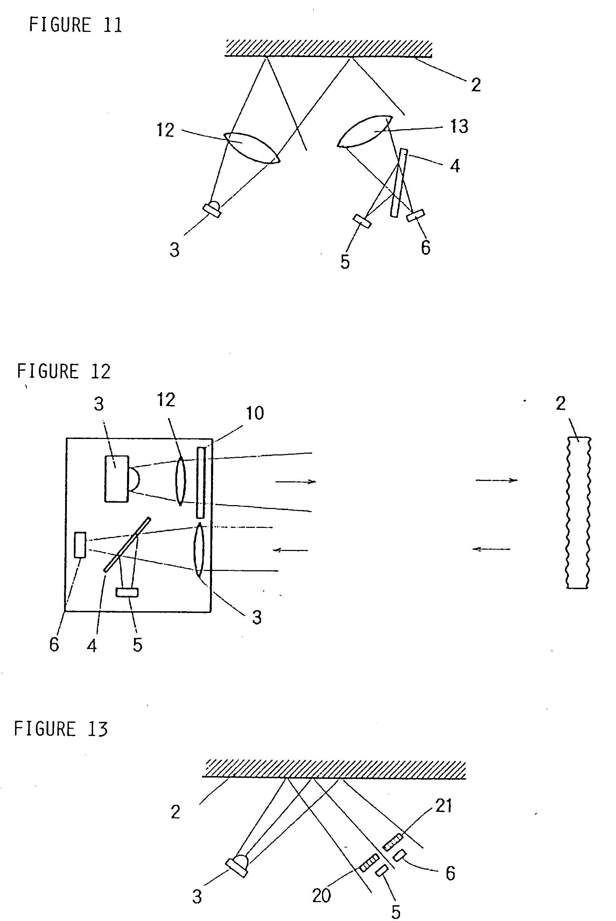

In the fifth embodiment shown in Figure 10, collimeter lens 12 and 13 are provided parallel light reflected by the object 2. In the sixth embodiment shown in Figure 11, divergent light is reflected by the object 2 providing a more stable light receiving arrangement.

In Figure 12, a seventh embodiment is shown for detecting surface roughness. If the surface is rough, the detectors 5 and 6 receive about the same amount of light because emitting light beam is scattered by the rough surface.

In Figure 13, an eighth embodiment is shown having an S polarizing filter 20 and R polarizing filter 21.

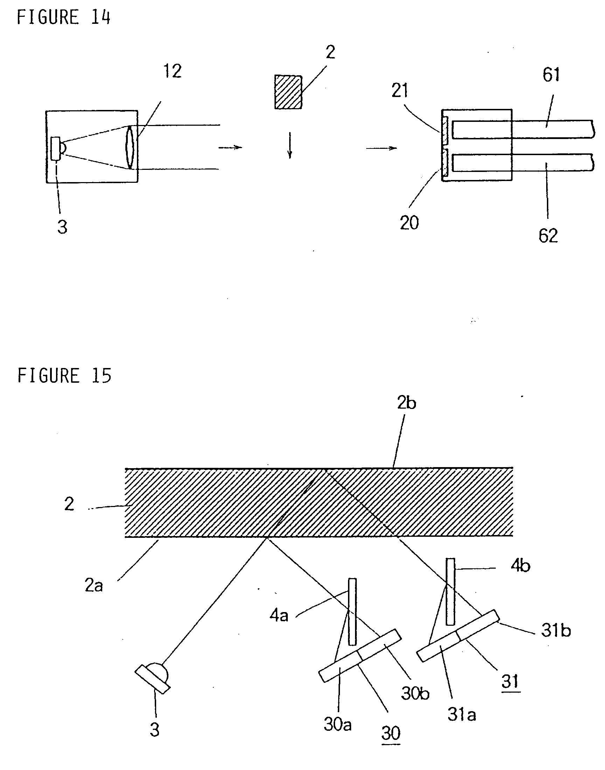

In Figure 14, a ninth embodiment is shown using optical fibers 61 and 62. The optical fibers transmit the light to photodetectors located at the ends (not shown) of the optical fibers.

In Figure 15, a tenth embodiment is shown having a pair of light receiving devices 30 and 31. This embodiment is used when detecting a transparent object 2, which causes light to reflect as both surfaces 2a and 2b.

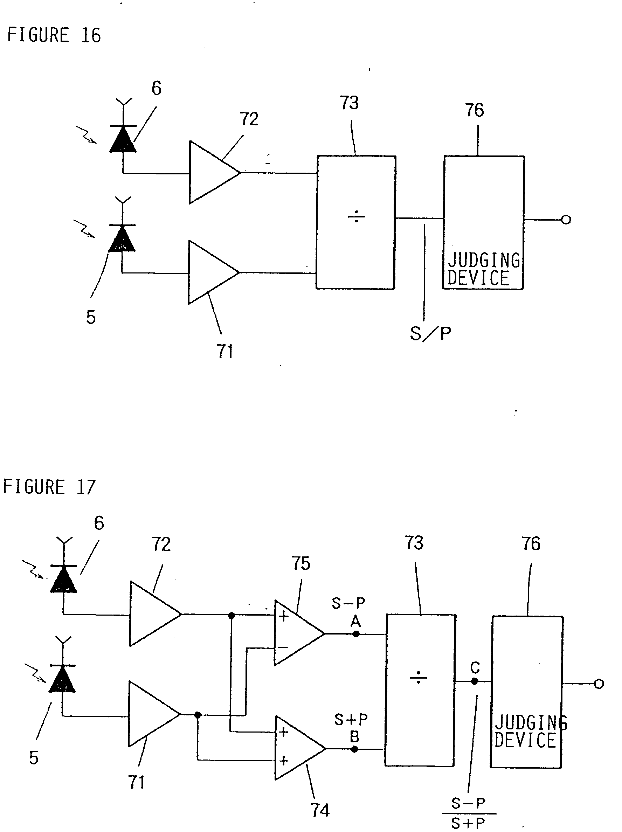

A circuit diagram of the light sensing device is shown in Figure 16. Photodetectors 5 and 6 are connected to amplifiers 71 and 72, respectively. The amplifiers 71 and 72 are connected to divider, which is connected to judging device 76.

Another circuit diagram of the light sensing device is shown in Figure 17. This circuit includes a subtracter 75 and adder 74 connected as shown.

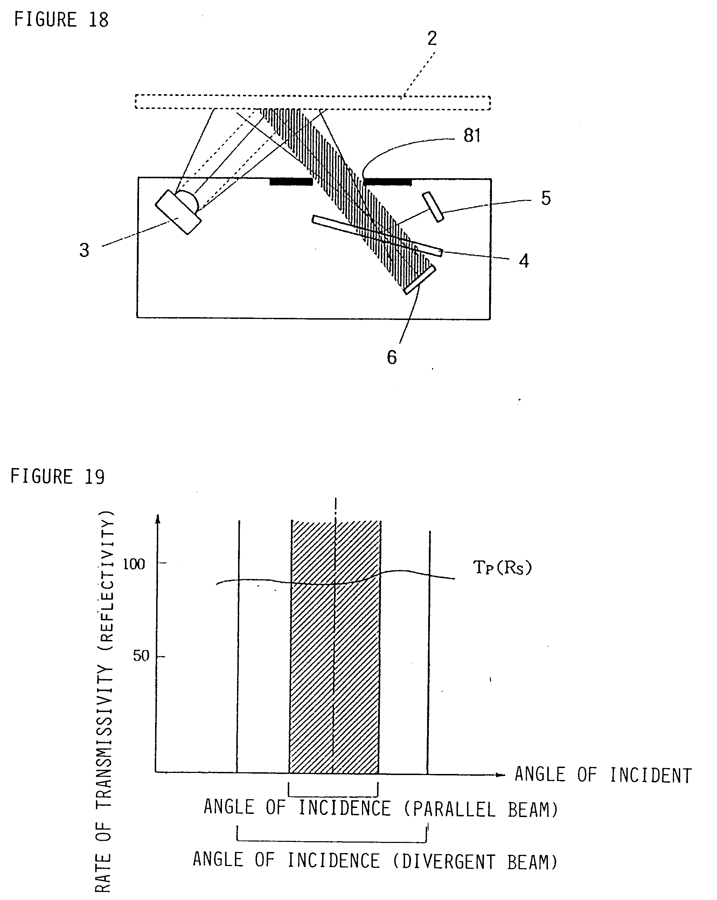

In Figure 18, a eleventh embodiment is shown having a light source with no collimeter lens. Thus, a slit 81 must be provided to restrict the angle of reflected light by the object reaching the photodetector 6. Thus, as shown in Figure 19, the slit 81 stabilizes the rate of transmissivity verses angle of incident of light passing through the slit 81.

In this section, we shall discuss anther optical sensing device with a mirror as a twelfth embodiment with reference to the drawings.

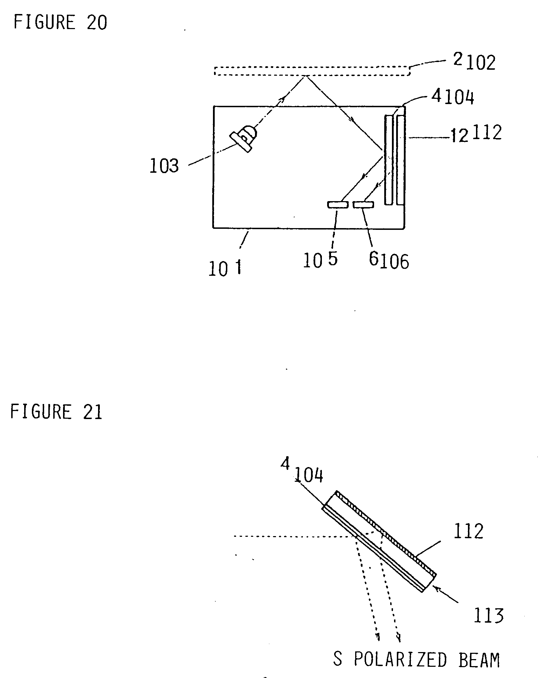

Figure 20 shows the basic principle underlying the optical device of this embodiment. The LED 103 or some other light source which emits light onto object 102 is placed inside case 101. The light emitted by LED 103 strikes object 102 obliquely. The light emitted onto object 102 is reflected by that object and detected by the detection device provided inside case 101. This optical sensing device consists of polarizing beam splitter (henceforth, PBS) 104, a type of polarizer; a totally reflective mirror 112 to reflect the portion of light transmitted by the PBS 104 toward the detection device; and photodetectors 105 and 106. The PBS 104 is formed from parallel sheets of a transparent glass material. A conductive multilayer film containing conductors or metal film is formed on the surface struck by the light reflected from object 102. This splits the reflected light, which strikes PBS 104 obliquely, into two mutually orthogonal polarized components. The S polarized component is reflected by the surface of PBS 104 and strikes photodetector 105. The P polarized component is transmitted through the flat parallel sheets of transparent glass and reflected by the mirror, and it strikes photodetector 106, which is adjacent to photodetector 105.

Figure 21 shows another preferred embodiment of a PBS 104, which can serve as the device to polarize and split the light and a totally reflective mirror 112, which can serve as the device to reflect the light.

If on one surface of a substrate the PBS 104 is formed from optical thin film, and on the opposite surface is formed, from the same substance, the totally reflective mirror, the light reflected by the object can be detected by adjacent photodetectors after it is polarized and split by the PBS 104. This design allows the size of the sensor to be significantly reduced, and it also reduces both the time required for assembly and the cost.

With the configuration described above, if object 102 is transparent, the reflectivity for the S polarized component will be greater than that for the P polarized component at object 102. If the surface of object 102 is uneven, the two polarized components will have virtually identical reflectivity. By obtaining the ratio of the outputs of the aforesaid photodetectors 105 and 106, then, the device can distinguish whether or not object 102 is transparent; and by the same token, it can detect when the surface of a transparent material (such as glass) has become clouded or has drops of water adhering to it. Even if object 102 is moved slightly or its orientation is changed, the quantities of light of the P and S polarized components which strike the aforesaid photodetectors 105 and 106 will vary in the same way. The output ratio of photodetectors 105 and 106 will vary only slightly, guaranteeing a consistent output.

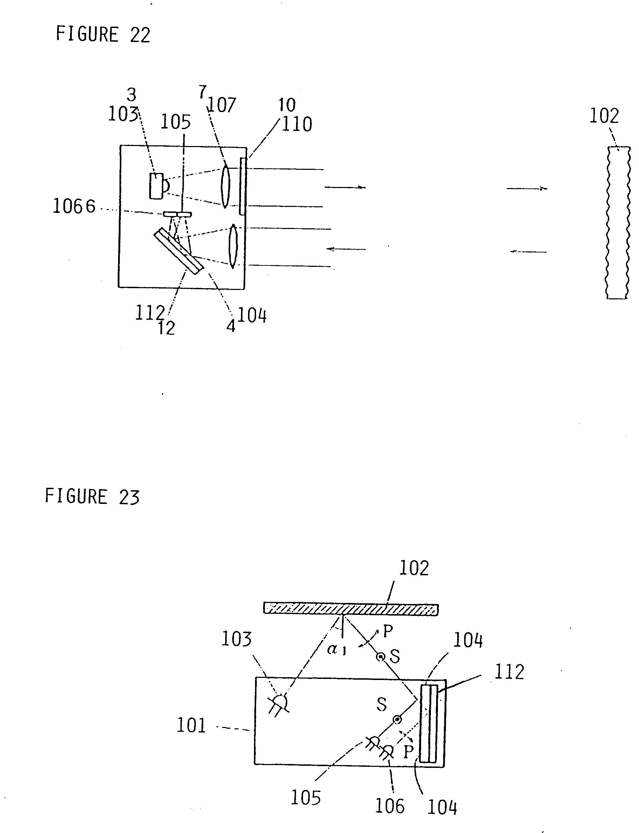

Figure 22 shows another preferred embodiment designed so that it can detect surface condition. The light from LED 103 passes through polarizer 110, and the light which is emitted is essentially linearly polarized. If a semiconductor laser is used for LED 103, polarizer 110 may be omitted. The portion of the light emitted by LED 103 which is transmitted along the optical axis strikes object 102 virtually perpendicularly. Photodetectors 105 and 106 are positioned so that they can detect the light reflected directly by object 102.

If the surface of object 102 is smooth, the polarization of the light emitted by LED 103 will be maintained when it is reflected. If the surface is rough, it will scatter the light as it reflects it, and the polarization will not be maintained. If, for example, the entire surface is uneven, the quantities of light reaching photodetectors 105 and 106 will be virtually identical. In this way the sensor can discriminate among objects with different surfaces.

Figure 23 shows a preferred embodiment which can distinguish an object 102 which is made of a transparent material like glass from one which is made of paper coated with paint. If the light is made to strike object 102 at an oblique angle, the reflected light will have various ratios of P to S polarized components. To detect this, PBS 104 has a totally reflective mirror 112 and photodetectors 105 and 106. Thus this sensor can discriminate among surfaces which posed problems for prior art sensors.

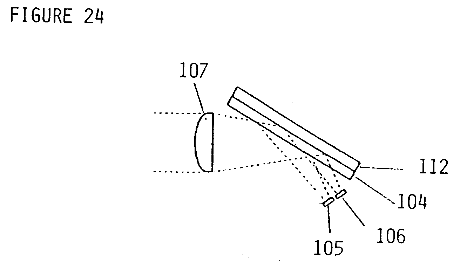

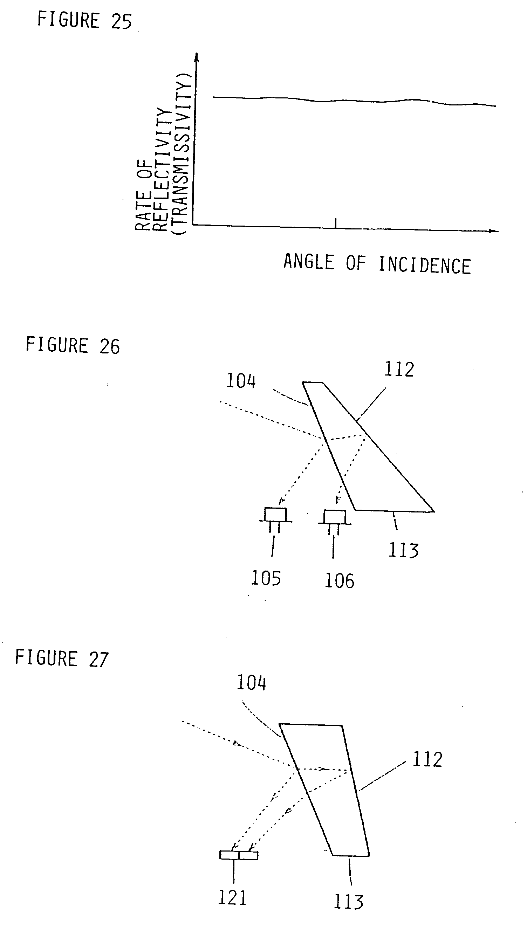

Figure 24 shows how a lens 107 can be used in the photodetector unit. When the beams reflected by the front and back surfaces of PBS 104 are detected separately, as shown in Figures 24 and 25, it may happen that the diameter of the beam striking PBS 104 is greater than the thickness of substrate 113. In this case, two beams reflected by the different surfaces of substrate 113 may overlap. To prevent this, the beams are constricted by lens 107, pictured in Figure 24, before they strike PBS 104. The spectral (sic) characteristic of PBS 104 is shown in Figure 25. If we use a beam splitter whose reflectivity (or transmissivity) is only slightly dependent on angle of incidence over the range of angles at which the light strikes PBS 104, then all the light striking PBS 104 will be properly polarized and split, and the data concerning object 102 will be transmitted correctly to the photodetectors.

Figure 26 shows an embodiment in which substrate 113 is wedge-shaped. For photodetectors 105 and 106, relatively large optical fibers or can-type photodiodes are used. PBS 104, which is formed on substrate 113, receives the light reflected by mirror 112. If substrate 113 is wedge-shaped, as shown in Figure 25, the space between the two reflected beams will be increased, and the beams can be detected by relatively large photodetectors.

Figure 27 shows another embodiment in which substrate 113 is wedge-shaped. The photodetector device is photodetector chip 121, which is divided into two segments. The two polarized components of light are detected by these very small regions. If substrate 113 is wedge-shaped, as in Figure 27, the space between the two reflected beams can be reduced so that the beams can be detected by segmented chip 121.

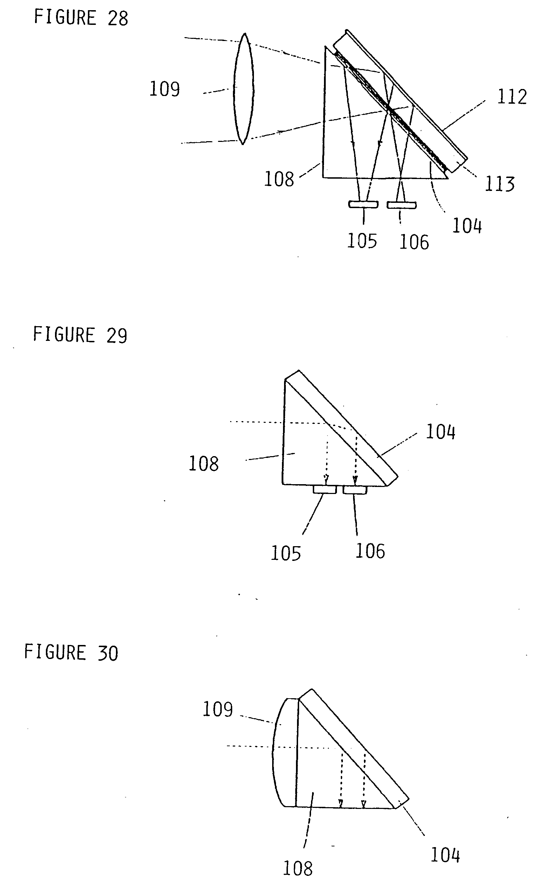

If the light is to strike PBS 104 in a given range of angles of incidence, as shown in Figure 24, then it is generally necessary to set the optical axis of the light striking PBS 104 so that the angle of incidence with respect to PBS 104 is at least 60° so that the beam can be properly polarized and split. From the point of view of design, this poses many difficulties in the arrangement of the elements. However, if PBS 104 is formed on one of the surfaces of triangular prism 108 shown in Figure 28, a beam splitter can be achieved whose angle of incidence will be approximately 45°.

When this configuration is chosen, photodetectors 105 and 106 can be arranged on one of the facets of prism 108 as shown in Figure 29, or lens 109 can be provided on the remaining facet, as shown in Figure 30. This will yield a photodetector module, which will make it easier to handle and assemble the elements.

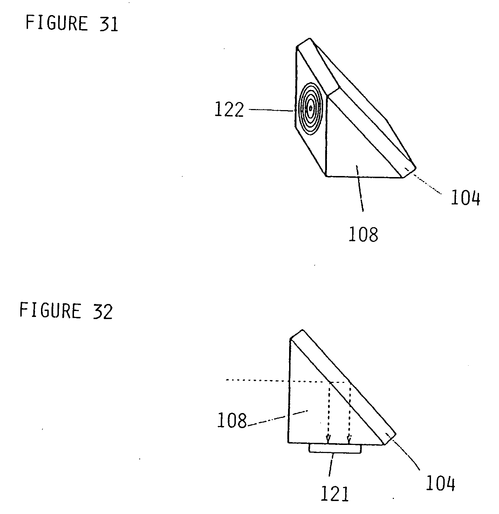

Figure 31 shows an example in which Fresnel lens 122 is created on one of the facets of prism 108. If lens 122 is formed during the same process in which prism 108 is produced, the photodetector unit can be made smaller and its cost can be reduced.

In Figure 32, photodetectors 105 and 106 are enclosed in a single package 121. This package 121 can then be mounted on one of the facets of prism 108. The arrangement of the components inside the package like that shown in Figures 4A and 4B.

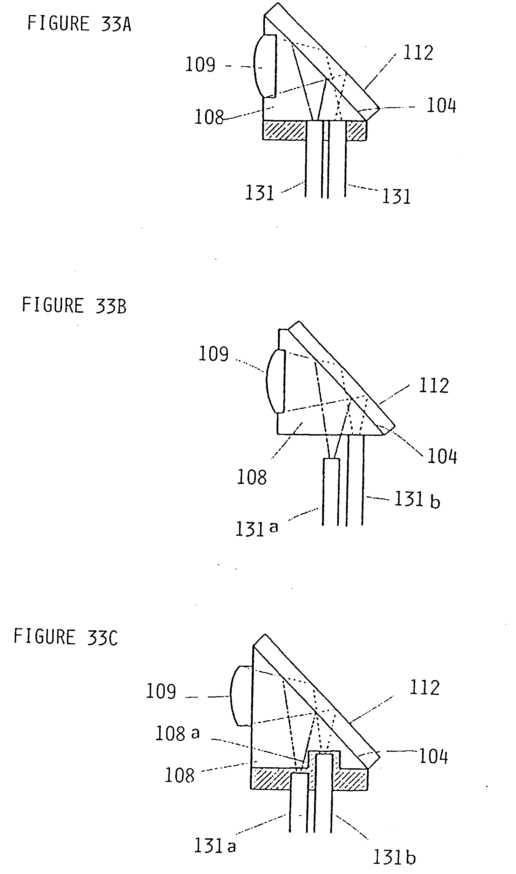

Figure 33A shows an embodiment in which optical fiber 131 serves to conduct light to the photodetector device. With this configuration, multiple photodetectors can be arrayed one next to the other. This arrangement of multiple optical fibers 131 allows the sensor to be downsized.

Figure 33B shows an embodiment in which optical fibers 131a and 131b are staggered in order to detect two reflected beams in the same fashion. Figure 33C shows an embodiment in which a height difference 108a, is created on the facet of prism 108 where the photodetectors are to be arranged, so that it will be easier to stagger optical fibers 131a and 131b.

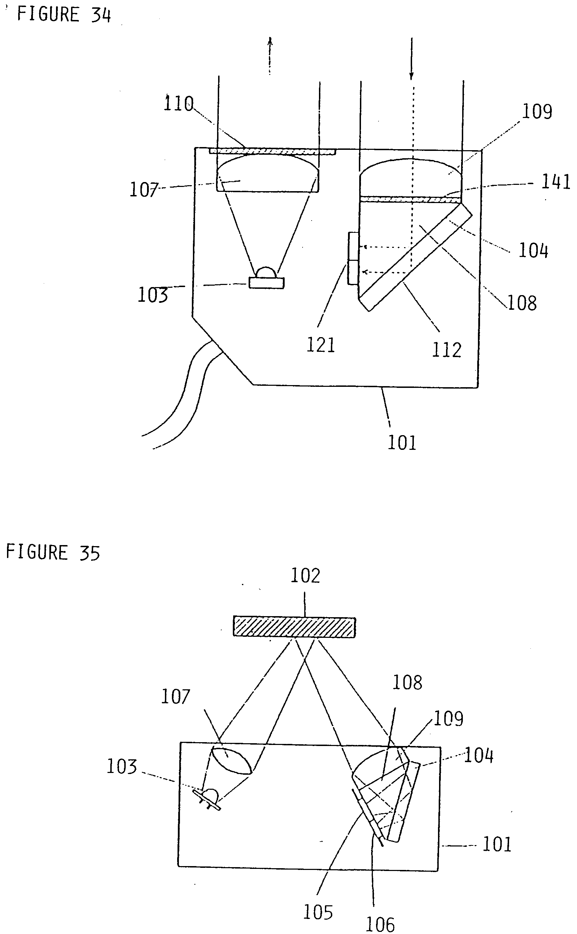

Figure 34 shows an embodiment in which this scheme is applied in a gloss sensor. The light emitted by LED 103 is more or less linearly polarized. A flaw on the surface of object 102 will cause the polarized components to be disrupted when they are reflected. This disruption will be detected by segmented photodetector 121 in the photodetection unit.

In a photodetector module, a filter such as visible light filter 141 or a band pass filter can be inserted or attached to a facet of prism 108 in order to remove the stray light, i.e., the light not emitted by LED 103, so that it is not detected by photodetector 121. To prevent the light reflected by object 102 from reaching photodetector 121 without being reflected by PBS 104 or mirror 112, those two components should be positioned so that they reflect the light toward the side of LED 103. This will insure that the sensing is accurate.

Figure 35 shows a modular version of the photodetector unit in Figure 20. It achieves the same effects as the example in Figure 34.

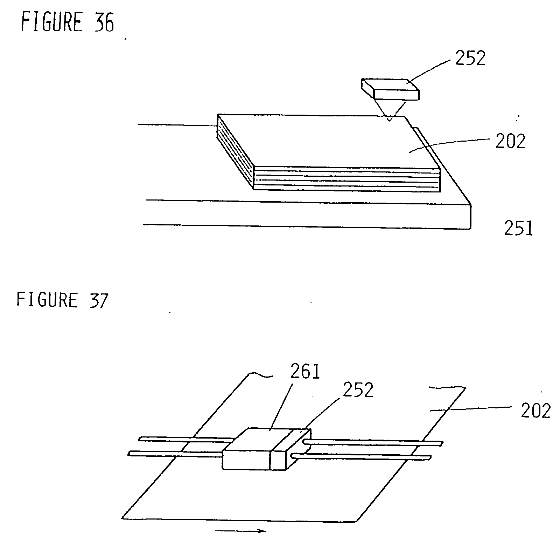

Figure 36 shows a sample first application of an optical sensing device designed according to this invention. Here the optical sensing device is used in a printing device such as a printer or copy machine (or word processor, plotter, fax machine or recorder). The optical sensor detects whether the paper 202 to be printed, which is placed on paper tray 251, is paper or OHP film, that is, whether it is transparent or opaque; or it distinguishes what type of paper it is (ordinary, thermographic, or coated).

Optical sensing device 252 is placed over paper tray 251. It detects what sort of paper is to be printed on and sets or adjusts the parameters for the printing process, both the mechanical parameters for paper feed and the print parameters such as copying scheme or darkness.

It would also be possible to mount optical sensing device 252 on the paper supply unit or somewhere on its feed route (not pictured) in such a way that it would be able to detect what type of paper was being used and set or adjust the parameters alluded to above.

Figure 37 shows an embodiment in which an optical sensing device 252 of this invention serves to distinguish what type of paper is being used is mounted on printer head 261. This scheme allows the parameters for the printing process to be adjusted to conform to the paper 202.

If the sensor is mounted on printer head 261, it can detect the edge of the paper and thereby also detect its size, shape, and alignment. The sensor will thus serve to optimize the printed product.

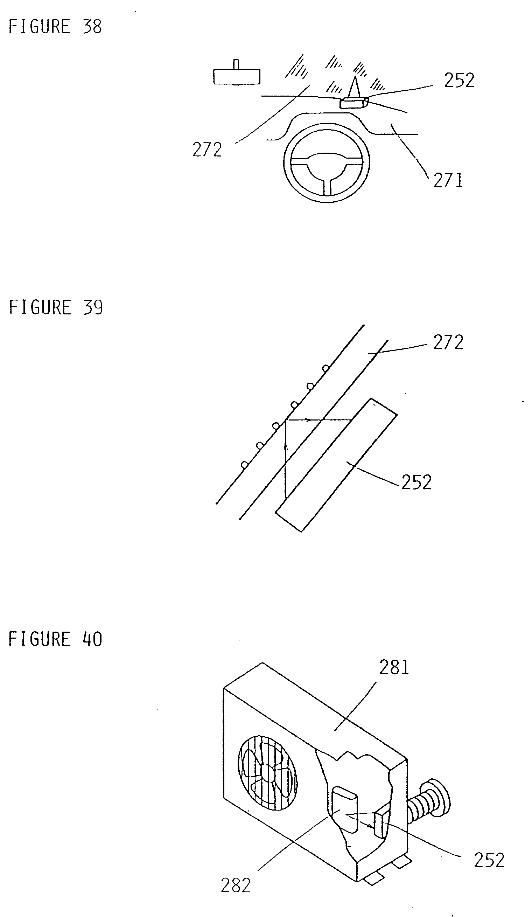

Figure 38 shows another preferred application for the optical sensing device 252. In this example, optical sensing device 252 is mounted on the dashboard 271 of an automobile, where it serves to detect when the windshield 272 has become clouded. By detecting whether or not the interior surface of windshield 272 is shiny, the sensor in effect detects whether the glass is steamed up. If the windshield is clouded beyond a specified level, the air conditioner is automatically activated to serve as a dehumidifier. The sensor could also be used to detect clouding of windows or mirrors in homes or offices.

As shown in Figure 39, optical sensing device 252 can be used to detect when there are drops of water on the (outer) surface of windshield 272. When it is determined that the drops on the windshield exceed a certain level, the windshield wipers can be automatically activated.

The sensor could also be used to detect changes in the intensity of the light transmitted through windshield 272 from the exterior. Then at a certain threshold value of illumination, the headlights could be switched on or off.

Figure 40 shows another preferred application of the optical sensing device 252. In this example, optical sensing device 252 is mounted next to evaporator 282 in exterior-mounted air conditioner 281, where it serves to monitor the surface of the radiator. The sensor can detect whether there is frost on the surface of evaporator 282 so as to automatically control the operating state of the air conditioner. Likewise, the sensor can be used to detect frost on the radiator of a refrigerator and control its operating state.

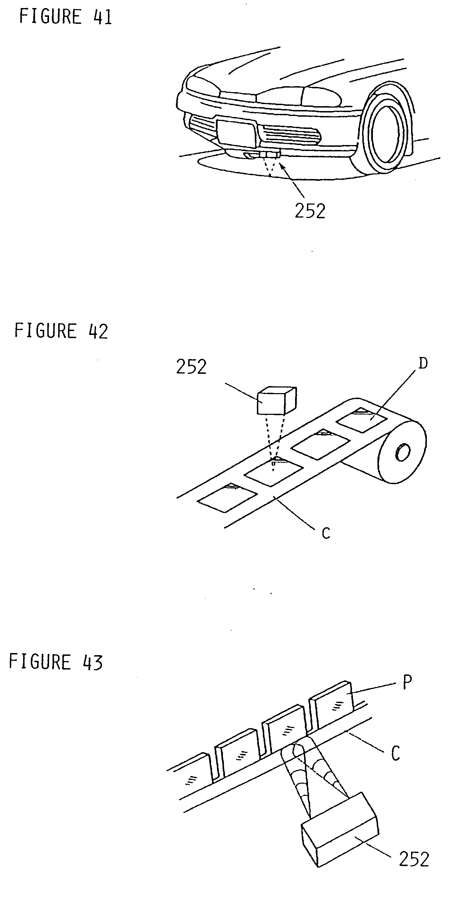

Figure 41 shows a optical sensing device 252 located on the front of an automobile for detecting water or ice on the road.

Figure 42 shows an optical sensing device 252 for detecting sheets D on assembly line C.

Figure 43 shows an optical sensing device 252 for detecting product P on assembly line C.

Figure 44 shows an optical sensing device 252 for detecting fake money introduced into slot F.

Figure 45 shows a paper 202 having a layer of paint G, and detector 252 detects the thickness of the paint layer.

As has been explained, the optical sensing device has two photodetectors which separately detect mainly the P and mainly the S polarized components of the light emitted by a light source and reflected by an object. Since the output ratio of the P to S polarized components does not vary significantly with changes in the object's position or orientation, detection remains consistent. The ratio of P to S polarized components can be used to distinguish different sorts of objects, thus, enhancing the sensor's detection capability. If the photodetectors are mounted side by side, the device sensing device can be made smaller. Modularizing the photodetector unit will simplify the handling of the photodetectors during the assembly process, and will significantly increase the reliability of the sensor with respect to vibration and other stresses.

## Claims

1. An optical sensing device, comprising:
a light source for emitting light onto an object;
a polarizing beam splitter positioned to receive light reflected by the object, said polarizing beam splitter reflects one component of polarized light and transmit the other portion of polarized light through said polarizing beam splitter;
a first photodetector to detect one light beam of one polarized component;
a second photodetector to detect one light beam of the other polarized component; and
a device for comparing the quantities of light detected by said photodetectors.

2. The optical sensing device according to claim 1, wherein said light source emits light having substantially equal intensity of P and S polarized light components.

3. The optical sensing device according to claim 1, wherein said light source emits straight polarized light.

4. The optical sensing device according to claim 3, said light source including a polarizing filter for emitting one component of polarized light.

5. The optical sensing device according to claim 4, wherein said polarizing filter mainly polarizes P or S component.

6. The optical sensing device according to any preceding claim wherein said first photodetector receives the S component and said second photodetector receives the R component of the polarized light.

7. The optical sensing device according to any preceding claim wherein said polarizing beam splitter is constructed of multiple optical layers.

8. The optical sensing device according to any preceding claim wherein said polarizing beam splitter separates the light reflected by the object into one beam having predominantly a P polarized component and another beam having predominantly an S polarized component.

9. The optical sensing device according to any preceding claim wherein said polarizing beam splitter is positioned on an optical path on which the light reflected by the object has been condensed.

10. The optical sensing device according to any preceding claim wherein said photodetectors are positioned so that their receptive surfaces face in substantially the same direction.

11. An optical sensing device according to any preceding claim including a reflecting element positioned behind said polarizing beam splitter to reflect the component of polarized light passing through said polarizing beam splitter back through said polarizing beam splitter.

12. The optical sensing device according to claim 11 wherein an optical axis of the component of light passed through said polarizing beam splitter that is directed towards said first photodetector is parallel to an optical axis of the component of polarized light that has been reflected by said polarizing beam splitter and directed toward said second polarizing beam splitter.

13. The optical sensing device according to claim 11 or 12 wherein said polarizing beam splitter and said reflecting element have a one-piece construction.

14. The optical sensing device according to claim 11 or 12 wherein said polarizing beam splitter and said reflecting element are defined by multiple optical layers with a light reflecting layer applied to one side thereof.

15. The optical sensing device according to any of claims 11 to 14 wherein said first photodetector detects light which is predominantly of a P polarized component and said second photodetector detects light which is predominantly of a S polarized component.

16. The optical sensing device according to any of claims 11 to 15 wherein said polarizing element is constructed of multiple optical layers. 17. The optical sensing device according to any of claims 11 to 16 wherein said polarizing beam splitter separates the light reflected by the object into one beam having predominantly a P polarized component and another beam having predominantly an S polarized component.

17. The optical sensing device according to any of claims 11 to 16 wherein said polarizing beam splitter is positioned on an optical path on which the light reflected by the object has been condensed.

18. The optical sensing device according to any preceding claim wherein the device is configured for sensing a transparent object.

19. The optical sensing device according to any preceding claim wherein the device is configured for determining whether or not the object is glossy.

20. The optical sensing device according to any preceding claim wherein the device is configured to detect when a glass or mirror has become clouded or have drops of water on it.

21. An optical sensing device according to any preceding claim wherein the device is configured to determine whether or not there is frost adhering to an air conditioner or refrigerator.

22. An optical sensing device according to any preceding claim wherein the device is configured to control the operation of an air conditioner or refrigerator based on how much frost is adhering to it.

23. An optical sensing device according to any of claims 1 to 17 wherein the device is configured to determine the condition of the road surface over which it travels.

24. An optical sensing device according to any of claims 1 to 17 wherein the device is configured to determine whether there are defects or inferior workmanship in products on a production line.

25. A printing device comprising:
a light source for emitting light onto an object;
a polarizing beam splitter positioned to receive light reflected by the object, said polarizing beam splitter reflects one component of polarized light and transmit the other portion of polarized light through said polarizing beam splitter;
a first photodetector to detect one light beam of one polarized component;
a second photodetector to detect one light beam of the other polarized component; and
a device for comparing the quantities of light detected by said photodetectors.

26. A printer according to claim 25, including a reflecting element positioned behind said polarizing beam splitter to reflect the component of polarized light passing through said polarizing beam splitter back through said polarizing beam splitter.

27. A printer according to claim 25 or 26 including components for rendering the printer into a photocopier.
